# EUROPÄISCHE PATENTSCHRIFT

(11) **EP 2 649 437 B1**
(45) Veröffentlichungstag und Bekanntmachung des Hinweises auf die Patenterteilung: **26.06.2019**
(21) Anmeldenummer: 11774023.3
(22) Anmeldetag: 20.10.2011
(51) Int. Cl.: H01M 2/16, H01M 4/485, G01N 27/411, H01M 10/0562, H01M 10/39, H01M 4/02, H01B 1/12, H01M 10/054

(54) **Galvanische Natrium-Chalkogen-Zelle mit Natriumionenleiter**
Galvanic sodium chalcogen cell with sodium ion conductor
Cellule galvanique au chalcogène de sodium avec conducteur ionique de sodium

(30) Priorität: 09.12.2010 DE 102010062726
(43) Veröffentlichungstag der Anmeldung: 16.10.2013
(73) Patentinhaber: Robert Bosch GmbH, 70442 Stuttgart (DE)
(72) Erfinder: MOC, Andre, 02779 Grossschoenau (DE); EISELE, Ulrich, 70199 Stuttgart (DE); LOGEAT, Alan, 70178 Stuttgart (DE)
(86) Internationale Anmeldenummer: PCT/EP2011/068286
(87) Internationale Veröffentlichungsnummer: WO 2012/076230

(56) Entgegenhaltungen:
- EP-A1- 2 649 661
- JP-A- S 628 468
- JP-A- 63 274 623
- JP-A- 2005 251 563
- US-A- 4 268 587
- US-A1- 2004 119 483
- KIKKAWA, S.; YASUD, F.; KOIZUMI,M.: "Ionic conductivities of sodium titanate Na2Ti3O7, potassium titanate (K2Ti4O9) and their related materials", MATERIALS RESEARCH BULLETIN, Bd. 20, Nr. 10, 1985, Seiten 1221-1227, XP002667170, ISSN: 0025-5408
- DOMINKO R ET AL: "Reversible lithium insertion into Na2Ti6O13 structure", ELECTROCHEMISTRY COMMUNICATIONS, ELSEVIER, AMSTERDAM, NL, vol. 8, no. 4, 1 April 2006 (2006-04-01), pages 673-677, XP028041504, ISSN: 1388-2481, DOI: 10.1016/J.ELECOM.2006.02.017 [retrieved on 2006-04-01]

## Beschreibung

Die vorliegende Erfindung betrifft eine galvanische Zelle mit einem Natriumionenleiter.

### Stand der Technik

Natrium-Schwefel-Zellen werden herkömmlicherweise bei einer Temperatur (-300 °C) betrieben, bei der Schwefel und Natrium flüssig sind, um eine ausreichende Leitfähigkeit und einen ausreichenden Transport von Natriumionen sowie einen ausreichenden Kontakt zwischen den Reaktanden (Schwefel, Natriumionen und Elektronen) zu gewährleisten. Als Kathodenmaterial wird bei derartigen Hochtemperatur-Natrium-Schwefel-Zellen üblicherweise ein Schwefel-Graphit-Verbundwerkstoff eingesetzt.

Natrium-Schwefel-Zellen mit einer Schwefel-Graphit-Kathode können jedoch nicht bei Raumtemperatur betrieben werden, da die Natriumionenleitfähigkeit von festem Schwefel und Graphit nicht ausreicht. Darüber hinaus kann beim wiederholten Laden und Entladen einer derartigen Natrium-Schwefel-Zelle ein phasenumwandlungsbedingter, irreversibler Kapazitätsverlust auftreten.

Die Verwendung von flüssigen Elektrolyten kann bei Natrium-Schwefel-Zellen dazu führen, dass die Natriumanode mit dem Elektrolyten, dem Elektrolytlösungsmittel beziehungsweise Polysulfiden reagiert und korrodiert. Zudem können sich beim wiederholten Laden und Entladen Natriumdendrite zwischen den Elektroden bilden und die Zelle kurzschließen.

Derartige Zellen sind aus der US 2004/119483 A und der US 4268587 A bekannt.

### Neue Beschreibungsseite 1a

Weiterhin ist aus der Publikation Kikkawa, S et al "Ionic conductivities of sodium, titanate, Na2Ti3O7, potassium titanate (K2Ti4O9) and their related materials", Material Research Bulletin, Band 20, Nr. 10, 1985, Seiten 1221-1227 Natrium-Ionen-Ieitende Natriumtitanate, wie beispielsweise Na₂Ti₃O₇, bekannt.

Weitere gattungsgemäße galvanische Zellen sind beispielsweise der JP 63274623 A, der EP 2649661 A1, der JP 2005251563 A sowie den Publikationen Dominko R. et al "Reversible lithium insertion into Na2Ti6O13 structure", Electrochemistry Communications, Elsevier, Amsterdam, NL, Band 8, Nr. 4, 01. April 2006, Seiten 673-677 sowie der Publikation Pasierb P et al "The performance and long-time stability of potentiometric CO2 gas sensors based on the (Li-Ba) CO3/Nasicon/ (Na-Ti-O) Electrochemical Cells", Solid State Ion, North Holland Publication Company Amsterdam; NL, Band 157, Nr. 1-4, 01. Februar 2003, Seiten 357-363 zu entnehmen.

Darüber hinaus bezieht sich die JP S628468 A auf eine galvanische Zelle in Form einer Natriumcalkogen-Zelle, umfassend einen Natrium-Ionen-Leiter umfassend ein Natrium-Titanat.

### Offenbarung der Erfindung

Gegenstand der vorliegenden Erfindung ist eine galvanische Zelle in Form einer Natrium-Chalkogen-Zelle gemäß Anspruch 1. Die bevorzugten Ausführungen sind gemäß den abhängigen Ansprüchen 2 bis 7.

Unter einem Natriumtitanat kann im Rahmen der vorliegenden Offenbarung der Erfindung sowohl ein reines Natriumtitanat als auch ein Natriumtitanat-Mischoxid beziehungsweise ein dotiertes Natriumtitanat verstanden werden, welches ein oder mehrere Fremdatome (andere Metallkationen als Natrium und Titan), insbesondere Fremdatomoxide, umfasst, insbesondere wobei die Zahl der Fremdatome insgesamt > 0 % bis ≤ 10 %, zum Beispiel > 0 % bis ≤ 1 %, bezogen auf die Zahl der Titanatome, beträgt.

Die Gruppe der Natriumtitanate, beispielsweise Na₂Ti₃O₇, bildet eine schichtartige TiO₆-Oktaederstruktur, in welcher Natriumionen die Plätze zwischen den Oktaederschichten belegen. Es hat sich herausgestellt, dass die zwischen den Oktaederschichten angeordneten Natriumionen ein gutes lonenaustauschvermögen und eine gute Natriumionenleitfähigkeit aufweisen. Vorteilhafterweise können Natriumtitanate sogar bei Raumtemperatur eine gute Natriumionenleitfähigkeit aufweisen. Dies hat wiederum den Vorteil, dass Natriumtitanate als Festkörperelektrolyt in Tieftemperatur/(Raumtemperatur)-Natrium-Zellen und anderen Anwendungen, wie Sensoren, eingesetzt werden können. So kann vorteilhafterweise auf flüssige und gegebenenfalls entflammbare Elektrolyte verzichtet und die Langzeitstabilität und Sicherheit erhöht werden.

Darüber hinaus können Natriumtitanate, je nach Mischoxidzusammensetzung beziehungsweise Dotierung beziehungsweise Synthesebedingungen vorteilhafterweise zusätzlich als Elektronenleiter fungieren, so dass auf Additive zur Erhöhung der elektrischen Leitfähigkeit verzichtet und eine hohe Gesamtenergiedichte erzielt werden kann.

Im Sinn der vorliegenden Erfindung kann insbesondere ein Material als Natriumionen leitend verstanden werden, welches bei 25 °C eine Natriumionenleitfähigkeit von ≥ 1.10⁻⁶ S/cm aufweist. Als Elektronen nicht leitend kann im Sinn der vorliegenden Erfindung ein Material verstanden werden, welches bei 25 °C eine Elektronenleitfähigkeit von < 1·10⁻⁸ S/cm aufweist.

Zudem sind vorteilhafterweise die Rohstoffe zur Herstellung von Natriumtitanaten günstig in der Anschaffung und die Synthese kann durch energiesparende Niedrigtemperaturverfahren, beispielsweise die Hydrothermalsynthese, erfolgen.

Im Rahmen einer Ausführungsform weist das Natriumtitanat vierwertiges und/oder dreiwertiges Titan auf. Natriumtitanate des vierwertigen Titans, also nur Titan(IV) nicht Titan(III) aufweisende Natriumtitanate, haben sich insbesondere als Natriumionen leitende und Elektronen nicht leitende Festkörperelektrolyten als vorteilhaft erwiesen. Natriumtitanate, welche dreiwertiges Titan aufweisen, können vorteilhafterweise eine höhere Elektronenleitfähigkeit als Natriumtitanate, die nur vierwertiges Titan umfassen, aufweisen. Daher eignen sich dreiwertiges Titan umfassende Natriumtitanate insbesondere als Natriumionen und Elektronen leitende Festkörperelektrolyten.

Bei einem Natriumtitanat-Mischoxid beziehungsweise einem dotierten Natriumtitanat kann vorteilhafterweise die Natriumionen- und Elektronenleitfähigkeit durch Einstellen der Art und Menge an Fremdatomen eingestellt werden. Insbesondere kann das Natriumtitanat ein Natriumtitanat-Mischoxid sein, welches ein oder mehrere Fremdatomoxide umfasst, welche ausgewählt sind aus der Gruppe bestehend aus Natriumoxid, Lithiumoxid, Magnesiumoxid, Calciumoxid, Bariumoxid, Zinkoxid, Eisenoxid, Aluminiumoxid, Galliumoxid, Zirkoniumoxid, Manganoxid, Siliciumoxid, Nioboxid, Tantaloxid und Bismutoxid, beziehungsweise kann das Natriumtitanat mit einem oder mehreren Fremdatomen dotiert sein, welche ausgewählt sind aus der Gruppe bestehend aus Natrium, Lithium, Magnesium, Calcium, Barium, Zink, Eisen, Aluminium, Gallium, Zirkonium, Mangan, Silicium, Niob, Tantal und Bismut. Beispielsweise kann das Natriumtitanat-Mischoxid ein oder mehrere Fremdatomoxide umfassen, welche ausgewählt sind aus der Gruppe bestehend aus Natriumoxid, Lithiumoxid, Magnesiumoxid, Calciumoxid, Bariumoxid, Mangan(II)oxid, Zinkoxid, Eisen(II)oxid, Aluminiumoxid, Galliumoxid, Niob(III)oxid, Mangan(III)oxid, Eisen(III)oxid, Zirkoniumoxid, Mangan(IV)oxid, Siliciumoxid, Niob(V)oxid, Tantaloxid und Bismut(V)oxid, beziehungsweise kann das Natriumtitanat mit einem oder mehreren Fremdatomen dotiert sein, welche ausgewählt sind aus der Gruppe bestehend aus Natrium, Lithium, Magnesium, Calcium, Barium, Mangan(II), Zink, Eisen(II), Aluminium, Gallium, Niob(III), Mangan(III), Eisen(III), Zirkonium, Mangan(IV), Silicium, Niob(V), Tantal und Bismut(V).

Vorzugsweise sind dabei Titanplätze des Natriumtitanats anstatt mit Titan mit Fremdatomen besetzt. Beispielsweise können Titan(III)-Plätze mit Aluminium, Gallium, Niob(III), Mangan(III) und/oder Eisen(III) und/oder mit Magnesium, Calcium, Barium, Mangan(II), Zink und/oder Eisen(II) und Zirkonium, Mangan(IV) und/oder Silicium und/oder mit Natrium und/oder Lithium und Niob(V), Tantal und/oder Bismut(V) besetzt sein. Titan(IV)-Plätze können beispielsweise mit Zirkonium, Mangan(IV) und/oder Silicium und/oder mit Aluminium, Gallium, Niob(III), Mangan(III) und/oder Eisen(III) und Niob(V), Tantal und/oder Bismut(V) besetzt sein.

Im Rahmen einer Ausgestaltung umfasst der Natriumionenleiter ein dreiwertiges Titan aufweisendes Natriumtitanat. Insbesondere kann der Natriumionenleiter aus einem dreiwertiges Titan aufweisenden Natriumtitanat ausgebildet sein. Natriumtitanate, die dreiwertiges Titan aufweisen haben sich als Natriumionen und Elektronen leitende Festkörperelektrolyten als vorteilhaft erwiesen.

Erfindungsgemäß umfasst der Natriumionenleiter ein Natriumtitanat der allgemeinen Formel (1):

Na₂Ti^{IV}ₙ₋ₓTi^{III}ₓO_{2n+1-x/2}:MO

wobei 2 ≤ n ≤ 10 und 0 < x ≤ n ist und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid, also Na₂Ti^{IV}ₙ₋ₓTi^{III}ₓO_{2n+1-x/2} mit 2 ≤ n ≤ 10 und 0 ≤ x ≤ n, steht. Insbesondere kann der Natriumionenleiter aus einem derartigen Natriumtitanat ausgebildet sein. Derartige Natriumtitanate haben sich als Natriumionen und Elektronen leitende Festkörperelektrolyten als vorteilhaft erwiesen.

Im Rahmen einer anderen Ausgestaltung umfasst der Natriumionenleiter ein Natriumtitanat des vierwertigen Titans. Insbesondere kann der Natriumionenleiter aus einem Natriumtitanat des vierwertigen Titans ausgebildet sein. Natriumtitanate des vierwertigen Titans haben sich als Natriumionen leitende und Elektronen nicht leitende Festkörperelektrolyten als vorteilhaft erwiesen.

Im Rahmen einer weiteren Ausführungsform umfasst der Natriumionenleiter ein Natriumtitanat der allgemeinen Formel (2):

Na₂Ti^{IV}ₙO₂ₙ₊₁:MO

wobei 2 ≤ n ≤ 10 ist und MO für ein oder mehrere Fremdatomoxide steht, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅ oder für kein Fremdatomoxid, also Na₂Ti^{IV}ₙO₂ₙ₊₁ mit 2 ≤ n ≤ 10, steht. Insbesondere kann der Natriumionenleiter aus einem derartigen Natriumtitanat ausgebildet sein. Natriumtitanate der allgemeinen Formel (2), haben sich als Natriumionen leitende und Elektronen nicht leitende Festkörperelektrolyten als vorteilhaft erwiesen.

Im Sinn der vorliegenden Erfindung kann der Doppelpunkt (:) in Formel (1) und (2) insbesondere derart verstanden werden, dass in der Summenformel das Titanoxid teilweise mit einem oder mehreren Fremdatomoxiden ersetzt sein kann (Mischoxid/Dotierung).

Im Rahmen einer weiteren Ausführungsform umfasst der Natriumionenleiter weiterhin β-Aluminiumoxid, insbesondere texturiertes β-Aluminiumoxid. Unter texturiertem β-Aluminiumoxid kann dabei insbesondere ein β-Aluminiumoxid verstanden werden, welches eine gerichteten, beispielsweise mittels eines elektrischen und/oder magnetischen Feldes erzeugten, Aufbau, insbesondere zur Erhöhung der Natriumionenleitfähigkeit, aufweist.

Im Rahmen einer weiteren Ausführungsform ist der Natriumionenleiter ein Verbundwerkstoff, welcher Natriumtitanat, beispielsweise des vierwertigen Titans, insbesondere der allgemeinen Formel (2), und β-Aluminiumoxid umfasst.

Der Gegenstand der vorliegenden Erfindung ist eine galvanische Zelle in Form einer Natrium-Chalkogen-Zelle, zum Beispiel eine Natrium-Schwefel-Zelle oder eine Natrium-Sauerstoff-Zelle, welche als Natriumionenleiter das Natriumtitanat gemäß Anspruch 1 umfasst, sodass auch bei Raumtemperatur eine ausreichende Natriumionenleitfähigkeit gewährleistet werden kann. So kann vorteilhafterweise eine Tieftemperatur/(Raumtemperatur)-Zelle auf Festkörperbasis mit verbesserter Langzeitstabilität und Sicherheit zur Verfügung gestellt werden.

Im Rahmen einer weiteren Ausführungsform umfasst die Zelle den Natriumionenleiter als Festkörperelektrolyten. So kann vorteilhafterweise auf Hochtemperaturbedingungen beziehungsweise flüssige Elektrolyten verzichtet werden.

Im Rahmen einer weiteren Ausführungsform umfasst die Kathode (positive Elektrode) der Zelle einen erfindungsgemäßen Natriumionenleiter, insbesondere einen Natriumionenleiter, welcher ein dreiwertiges Titan aufweisendes Natriumtitanat umfasst. Die Verwendung eines derartigen Natriumionenleiters als Kathodenmaterial hat den Vorteil, dass der Natriumionenleiter zusätzlich Elektronen leitend ist und somit zugleich als Stromleiter fungieren kann. Auf diese Weise kann auf zusätzliche Additive zur Erhöhung der elektrischen Leitfähigkeit verzichtet und die Gesamtenergiedichte der Zelle optimiert werden.

Im Rahmen einer weiteren Ausführungsform sind die Anode (negative Elektrode) und die Kathode der Zelle durch einen erfindungsgemäßen Natriumionenleiter, insbesondere einen erfindungsgemäßen, Natriumionen leitenden und Elektronen nicht leitenden Natriumionenleiter, beispielsweise einen Natriumionenleiter, welcher ein Natriumtitanat des vierwertigen Titans umfasst, separiert. Eine Separation der Anode und Kathode durch derartigen Natriumionenleiter, welcher insbesondere eine geringe Elektronenleitfähigkeit aufweisen kann, hat den Vorteil, dass auf diese Weise Kurzschlüsse vermieden werden können.

Im Rahmen einer weiteren Ausführungsform weist die Kathode der Zelle mindestens ein Leitungselement auf. Das Leitungselement kann insbesondere einen erfindungsgemäßen Natriumionenleiter, insbesondere einen erfindungsgemäßen Natriumionen und Elektronen leitenden Natriumionenleiter, beispielsweise einen Natriumionenleiter mit einem dreiwertiges Titan aufweisenden Natriumtitanat, umfassen oder daraus ausgebildet sein. Über ein derartiges Leitungselement können vorteilhafterweise sowohl Natriumionen als auch Elektronen transportiert werden.

Das Leitungselement kann zum Beispiel in Form eines porösen, beispielsweise schwammartigen, Körpers oder in Form eines Draht- oder Fasergeflechts, beispielsweise aus Nanodrähten oder -fasern, ausgebildet sein. Unter Nanodrähten beziehungsweise -fasern können dabei insbesondere Drähte oder Fasern mit einem durchschnittlichen Durchmesser von ≤ 500 nm, beispielsweise von ≤ 100 nm, verstanden werden. Es ist jedoch ebenso möglich, dass die Kathode eine Vielzahl von, beispielsweise stab-, platten- oder gitterförmigen, Leitungselementen umfasst.

Vorzugsweise kontaktiert ein Abschnitt des Leitungselements beziehungsweise der Leitungselemente den, die Anode und die Kathode separierenden Natriumionenleiter und ein anderer Abschnitt des Leitungselements beziehungsweise der Leitungselemente einen Kathodenstromkollektor. Durch die Leitungselemente kann so eine gute Natriumionen- und Elektronenleitung gewährleistet werden. Beispielsweise kann ein Abschnitt eines, in Form eines porösen Körpers oder Draht- oder Fasergeflechts ausgebildeten Leitungselements den, die Anode und die Kathode separierenden Natriumionenleiter und ein anderer Abschnitt des, in Form eines porösen Körpers oder Draht- oder Fasergeflechts ausgebildeten Leitungselements den Kathodenstromkollektor kontaktieren.

Insbesondere kann die Kathode eine Vielzahl von Leitungselementen aus erfindungsgemäßen Natriumionenleitern umfassen, von denen jeweils ein Abschnitt den, die Anode und die Kathode separierenden Natriumionenleiter und ein anderer Abschnitt den Kathodenstromkollektor kontaktiert. Auf diese Weise kann eine besonders gute Natriumionen und Elektronenleitung gewährleistet werden. Beispielsweise kann die Kathode eine Vielzahl von ebenen oder gewölbten, zueinander beabstandeten platten- oder gitterförmigen Leitungselementen umfassen, welche jeweils einerseits den, die Anode und die Kathode separierenden Natriumionenleiter und andererseits den Kathodenstromkollektor kontaktieren. Die Leitungselemente können dabei zueinander im Wesentlichen parallel angeordnet sein. Beispielsweise können die Leitungselemente ähnlich den Lamellen einer Jalousie bezüglich einander angeordnet sein. Bezüglich des, die Anode und die Kathode separierenden Natriumionenleiters und des Kathodenstromkollektors können die Leitungselemente im Wesentlichen senkrecht angeordnet sein.

Alternativ oder zusätzlich dazu können auf dem Leitungselement Strukturen ausgebildet sein, welche einen erfindungsgemäßen Natriumionenleiter, insbesondere einen erfindungsgemäßen Natriumionenleiter mit einem dreiwertiges Titan aufweisenden Natriumtitanat, umfassen oder daraus ausgebildet sind. Durch die Strukturen kann vorteilhafterweise die Oberfläche des Leitungselements und damit die für die Natrium-Chalkogen-Redoxreaktion zur Verfügung stehende Fläche vergrößert werden. Bei den Strukturen kann es sich beispielsweise um Strukturen im Bereich von einigen Mikro- oder Nanometern handeln.

Die Leitungselemente und Strukturen können sowohl aus gleichen als auch aus unterschiedlichen Natriumionenleitern, insbesondere Natriumionen und Elektronen leitenden Natriumionenleitern ausgebildet sein. Insbesondere können die Leitungselemente und Strukturen aus dem gleichen Natriumionenleiter, insbesondere Natriumionen und Elektronen leitenden Natriumionenleitern, ausgebildet sein.

Vorzugsweise werden die Strukturen durch, beispielsweise nadelförmige, Natriumtitanatkristalle ausgebildet. Derartige Strukturen können beispielsweise durch eine Hydrothermalsynthese auf dem Leitungselement ausgebildet sein. Die Anode kann insbesondere aus metallischem Natrium oder einer Natriumlegierung, insbesondere aus metallischem Natrium, ausgebildet sein. So kann vorteilhafterweise eine hohe Maximalspannung erzielt werden.

Das Chalkogen kann insbesondere Schwefel und/oder Sauerstoff, insbesondere Schwefel, sein. Der Natriumionenleiter der Kathode beziehungsweise die Leitungselemente und auf den Leitungselementen ausgebildeten Strukturen können insbesondere mit dem Chalkogen infiltriert sein.

Hinsichtlich weiterer Merkmale und Vorteile der erfindungsgemäßen galvanischen Zelle wird hiermit explizit auf die Erläuterungen im Zusammenhang mit dem Natriumionenleiter, dem Sensor, dem Verfahren, der Verwendung und der Figurenbeschreibung verwiesen.

Ein weiterer Gegenstand der vorliegenden Offenbarung ist ein Sensor, beispielsweise ein _Kohlendioxid-, Stickoxid, insbesondere Stickstoffdioxid-, Alkohol-, Aldehyd- und/oder Carbonsäure-Sensor, welcher einen Natriumionenleiter umfasst.

Der Einsatz ist nicht beschränkt auf die Tieftemperatur(Raumtemperatur)-Na-S-Batterie. Auch in sensorischen Anwendungen, die Natriumionenleitfähigkeit oder Natriumionenleitfähigkeit und Elektronenleitfähigkeit erfordern, wäre der Einsatz denkbar.

Hinsichtlich weiterer Merkmale und Vorteile des Sensors wird hiermit explizit auf die Erläuterungen im Zusammenhang mit dem Natriumionenleiter, der erfindungsgemäßen galvanischen Zelle, dem Verfahren, der Verwendung und der Figurenbeschreibung verwiesen.

Ein weiterer Gegenstand der vorliegenden Offenbarung ist ein Verfahren zur Herstellung eines erfindungsgemäßen Natriumionenleiters, umfassend den Verfahrensschritt a): Herstellen eines Natriumtitanats durch eine Hydrothermalsynthese. Beispielsweise kann das in Verfahrensschritt a) ausgebildete Natriumtitanat zumindest teilweise kristallin oder sogar im Wesentlichen vollständig kristallin sein. Beispielsweise kann das Natriumtitanat in nadelförmigen Kristallen ausgebildet sein.

Die Natriumionen- und Elektronenleitfähigkeit und/oder die Kristallstruktur des Natriumtitanats können in Verfahrensschritt a) beispielsweise durch die Temperatur, den Druck, die zeitliche Dauer und/oder das Lösungsmittel der Hydrothermalsynthese eingestellt werden.

Im Rahmen einer weiteren Ausführungsform wird in Verfahrensschritt a) metallisches Titan und/oder eine titanhaltige Metallmischung beziehungsweise Metalllegierungen und/oder eine oder mehrere Titanverbindungen, beispielsweise Titanoxid und/oder Titannitrid, in einer wässrigen Natriumhydroxidlösung, beispielsweise mit einer Konzentration in einem Bereich von ≥ 5 mol/l bis ≤ 15 mol/l, beispielsweise bei einer Temperatur in einem Bereich von ≥ 130 °C bis ≤ 210 °C, umgesetzt.

Die Hydrothermalsynthese kann insbesondere in einem Autoklaven erfolgen. Die Reaktionszeit kann in Verfahrensschritt a) beispielsweise von ≥ 1 h bis ≤ 72 h betragen. Anschließend kann das Reaktionsprodukt abfiltriert, gegebenenfalls gewaschen und getrocknet werden.

Im Rahmen einer weiteren Ausführungsform umfasst das Verfahren weiterhin den Verfahrensschritt b): Erhitzen beziehungsweise Sintern des erhaltenen Natriumtitanats, beispielsweise auf eine beziehungsweise bei einer Temperatur in einem Bereich ≥ 400 °C bis ≤ 1100 °C, insbesondere unter reduzierenden Bedingungen, beispielsweise unter einer wasserstoffhaltigen Atmosphäre. So kann vierwertiges Titan zumindest teilweise in dreiwertiges Titan umgewandelt werden. Auf diese Weise kann vorteilhafterweise die Elektronenleitfähigkeit des Natriumtitanats erhöht und eingestellt werden.

Insbesondere kann durch das Verfahren eine erfindungsgemäße galvanische Zelle hergestellt werden. Dabei kann aus dem hergestellten Natriumtitanat ein Leitungselement hergestellt und/oder auf einem Leitungselement Natriumtitanatstrukturen ausgebildet werden. Zum Beispiel kann zunächst aus einem erfindungsgemäß hergestellten Natriumtitanat ein Leitungselement, beispielsweise durch ein Pressverfahren, geformt werden, auf welchem danach durch das Verfahren, insbesondere kristalline, Natriumtitanatstrukturen ausgebildet werden.

Hinsichtlich weiterer Merkmale und Vorteile des Verfahrens wird hiermit explizit auf die Erläuterungen im Zusammenhang mit dem Natriumionenleiter, der erfindungsgemäßen galvanischen Zelle, dem Sensor, der Verwendung und der Figurenbeschreibung verwiesen.

Ein weiterer Gegenstand der vorliegenden Offenbarung ist die Verwendung eines Natriumtitanats als Natriumionenleiter, insbesondere als Natriumionen leitenden Festkörperelektrolyten, beispielsweise als Natriumionen und Elektronen leitenden Festkörperelektrolyten oder als Natriumionen leitenden und Elektronen nicht leitenden Festkörperelektrolyten.

Hinsichtlich weiterer Merkmale und Vorteile der Verwendung wird hiermit explizit auf die Erläuterungen im Zusammenhang mit dem Natriumionenleiter, der erfindungsgemäßen galvanischen Zelle, dem Sensor, dem Verfahren und der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen:
Fig. 1 einen schematischen Querschnitt durch eine Ausführungsform einer erfindungsgemäßen Natrium-Chalkogen-Zelle; und
Fig. 2 eine Vergrößerung des in Fig. 1 markierten Bereichs.

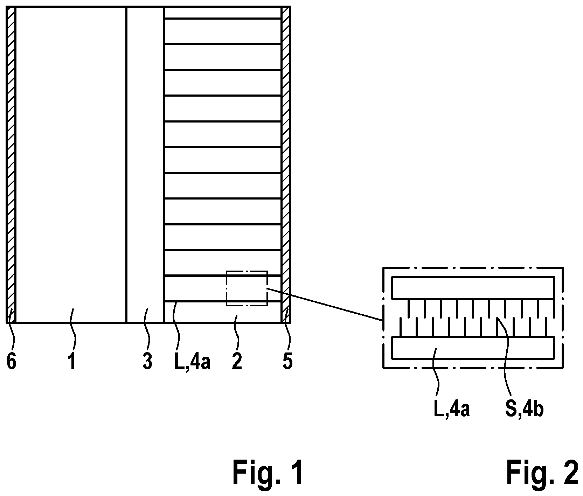

Figur 1 zeigt, dass die Natrium-Chalkogen-Zelle eine Natrium umfassende Anode 1 und eine Schwefel oder Sauerstoff umfassende Kathode 2 aufweist. Figur 1 veranschaulicht weiterhin, dass die Anode 1 einen Anodenstromkollektor 6 und die Kathode 2 einen Kathodenstromkollektor 5 aufweist. Figur 1 zeigt dabei insbesondere, dass die Anode 1 und die Kathode 2 durch einen Natriumionen leitenden und Elektronen nicht leitenden Natriumionenleiter 3 separiert sind. Dieser Natriumionenleiter 3 kann beispielsweise aus einem Natriumtitanat des vierwertigen Titans, beispielsweise Na₂Ti^{IV}ₙO₂ₙ₊₁, oder einem Verbundwerkstoff aus β-Aluminat und einem Natriumtitanat des vierwertigen Titans, beispielsweise Na₂Ti^{IV}ₙO₂ₙ₊₁, ausgebildet sein.

Ferner illustriert Figur 1, dass die Kathode 2 im Rahmen dieser Ausführungsform eine Vielzahl von Leitungselementen L aus einem Natriumionen und Elektronen leitenden Natriumionenleiter 4a umfasst, von denen jeweils ein Abschnitt den, die Anode 1 und die Kathode 2 separierenden Natriumionenleiter 3 und ein anderer Abschnitt den Kathodenstromkollektor 5 kontaktiert.

Figur 2 zeigt, dass im Rahmen dieser Ausführungsform auf den Leitungselementen L Strukturen S aus einem Natriumionen und Elektronen leitenden Festkörperelektrolyten 4b ausgebildet sind. Hierbei kann es sich beispielsweise um nadelförmige, Natriumtitanatkristalle handeln. Diese können beispielsweise mittels einer Hydrothermalsynthese auf den Leitungselementen L ausgebildet werden. Die Leitungselemente L und Strukturen S können beispielsweise aus einem Natriumionen und Elektronen leitenden Natriumionenleiter ausgebildet sein, welcher ein dreiwertiges Titan aufweisendes Natriumtitanat, beispielsweise der allgemeinen Formel (1): Na₂Ti^{IV}ₙ₋ₓTi^{III}ₓO_{2n+1-x/2} mit 2 ≤ n ≤ 10 und 0 ≤ x ≤ n, umfasst.

## Patentansprüche

1. Galvanische Zelle in Form einer Natrium-Chalkogen-Zelle, beispielsweise Natrium-Schwefel-Zelle oder Natrium-Sauerstoff-Zelle, umfassend einen Natriumionenleiter (4a,4b) umfassend ein Natriumtitanat, **dadurch gekennzeichnet, dass** der Natriumionenleiter ein Natriumtitanat der allgemeinen Formel (1):
Na₂Ti^{IV}ₙ₋ₓTi^{III}ₓO_{2n+1-x/2}:MO
umfasst, wobei 2 ≤ n ≤ 10 und 0 < x ≤ n ist und MO für ein oder mehrere Fremdatomoxide, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅, oder für kein Fremdatomoxid steht.

2. Galvanische Zelle nach Anspruch 1, wobei die Zelle den Natriumionenleiter (4a,4b) als Festkörperelektrolyten umfasst.

3. Galvanische Zelle nach Anspruch 1 oder 2, wobei die Kathode (2) der Zelle den Natriumionenleiter (4a,4b) umfasst.

4. Galvanische Zelle nach einem der Ansprüche 1 bis 3, wobei die Anode (1) und die Kathode (2) der Zelle durch einen Natriumionenleiter (3) separiert sind, wobei der Natriumionenleiter (3) ein Natriumtitanat der allgemeinen Formel (2):
Na₂Ti^{IV}ₙO₂ₙ₊₁:MO
umfasst, wobei 2 ≤ n ≤ 10.und MO für ein oder mehrere Fremdatomoxide steht, welche ausgewählt sind aus der Gruppe bestehend aus Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ und Bi₂O₅ oder für kein Fremdatomoxid steht.

5. Galvanische Zelle nach Anspruch 4, wobei der Natriumionenleiter (3) weiterhin β-Aluminiumoxid, insbesondere texturiertes β-Aluminiumoxid, umfasst.

6. Galvanische Zelle nach Anspruch 4 oder 5, wobei der Natriumionenleiter (3) ein Verbundwerkstoff ist, welcher Natriumtitanat und β-Aluminiumoxid umfasst.

7. Galvanische Zelle nach einem der Ansprüche 1 bis 6, wobei die Kathode (2) der Zelle mindestens ein Leitungselement (L) aufweist, welches den Natriumionenleiter (4a) umfasst und/oder auf dem Strukturen (S) ausgebildet sind, welche den Natriumionenleiter (4b) umfassen.

## Claims

1. Galvanic cell in the form of a sodium-chalcogen cell, for example sodium-sulfur cell or sodium-oxygen cell, comprising a sodium ion conductor (4a, 4b) comprising a sodium titanate, **characterized in that** the sodium ion conductor comprises a sodium titanate of the general formula (1):
Na₂Ti^{IV}ₙ₋ₓTi^{III}ₓO_{2n+1-x/2} : MO
where 2 ≤ n ≤ 10 and 0 < x ≤ n
and MO represents one or more foreign atom oxides selected from the group consisting of Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ and Bi₂O₅, or represents no foreign atom oxide.

2. Galvanic cell according to Claim 1, wherein the cell comprises the sodium ion conductor (4a, 4b) as a solid-state electrolyte.

3. Galvanic cell according to Claim 1 or 2, wherein the cathode (2) of the cell comprises the sodium ion conductor (4a, 4b).

4. Galvanic cell according to any of Claims 1 to 3, wherein the anode (1) and the cathode (2) of the cell are separated by a sodium ion conductor (3), where the sodium ion conductor (3) comprises a sodium titanate of the general formula (2):
Na₂Ti^{IV}ₙO₂ₙ₊₁ : MO
where 2 ≤ n ≤ 10 and MO represents one or more foreign atom oxides selected from the group consisting of Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ and Bi₂O₅, or represents no foreign atom oxide.

5. Galvanic cell according to Claim 4, wherein the sodium ion conductor (3) further comprises β-alumina, especially textured β-alumina.

6. Galvanic cell according to Claim 4 or 5, wherein the sodium ion conductor (3) is a composite material comprising sodium titanate and β-alumina.

7. Galvanic cell according to any of Claims 1 to 6, wherein the cathode (2) of the cell includes at least one conducting element (L) which comprises the sodium ion conductor (4a) and/or on which structures (S) are formed that comprise the sodium ion conductor (4b).

## Revendications

1. Cellule galvanique sous forme d'une cellule de sodium-chalcogène, par exemple une cellule à base de sodium-soufre ou une cellule à base de sodium-oxygène, comprenant un conducteur d'ions de sodium (4a, 4b) comprenant un titanate de sodium, **caractérisé en ce que** le conducteur d'ions de sodium comprend un titanate de sodium de formule générale (1):
Na₂Ti^{IV}ₙ₋ₓTi^{III}ₓO_{2n+1-x/2} : MO
dans laquelle 2 ≤ n ≤ 10 et 0 ≤ x ≤ n et MO représente un ou plusieurs oxydes d'atomes d'impureté, qui sont choisis dans le groupe constitué par Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ et Bi₂O₅ ou ne représente aucun oxyde d'impureté.

2. Cellule galvanique selon la revendication 1, la cellule comprenant le conducteur d'ions de sodium (4a, 4b) sous forme d'électrolyte à l'état solide.

3. Cellule galvanique selon la revendication 1 ou 2, la cathode (2) de la cellule comprenant le conducteur d'ions de sodium (4a, 4b).

4. Cellule galvanique selon l'une quelconque des revendications 1 à 3, l'anode (1) et la cathode (2) de la cellule étant séparées par un conducteur d'ions de sodium (3), le conducteur d'ions de sodium (3) comprenant un titanate de sodium de formule générale (2):
Na₂Ti^{IV}ₙO₂ₙ₊₁ : MO
dans laquelle 2 ≤ n ≤ 10 et MO représente un ou plusieurs oxydes d'atomes d'impureté, qui sont choisis dans le groupe constitué par Na₂O, Li₂O, MgO, CaO, BaO, MnO, ZnO, FeO, Ti₂O₃, Al₂O₃, Ga₂O₃, Nb₂O₃, Mn₂O₃, Fe₂O₃, ZrO₂, MnO₂, SiO₂, Nb₂O₅, Ta₂O₅ et Bi₂O₅ ou ne représente aucun oxyde d'impureté.

5. Cellule galvanique selon la revendication 4, le conducteur d'ions de sodium (3) comprenant en outre du β-oxyde d'aluminium, en particulier du β-oxyde d'aluminium texturé.

6. Cellule galvanique selon la revendication 4 ou 5, le conducteur d'ions de sodium (3) étant un matériau composite qui comprend du titanate de sodium et du β-oxyde d'aluminium.

7. Cellule galvanique selon l'une quelconque des revendications 1 à 6, la cathode (2) de la cellule présentant au moins un élément conducteur (L) qui comprend le conducteur d'ions de sodium (4a) et/ou sur lequel des structures (S) sont formées, qui comprennent le conducteur d'ions de sodium (4b).
